Europäisches Patentamt

European Patent Office

Office européen des brevets

(19)

(11) Veröffentlichungsnummer: **0 373 439**
**A2**

(12) **EUROPÄISCHE PATENTANMELDUNG**

(21) Anmeldenummer: 89122178.0

(22) Anmeldetag: 01.12.89

(51) Int. Cl.⁵: **C08F 2/10, C08F 20/06**

(30) Priorität: 15.12.88 DE 3842184

(43) Veröffentlichungstag der Anmeldung:
20.06.90 Patentblatt 90/25

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Hennig, Karl**
**Beethovenstrasse 26**
**D-6717 Hessheim(DE)**
Erfinder: **Hartmann, Heinrich, Dr.**
**Weinheimer Strasse 46**
**D-6703 Limburgerhof(DE)**
Erfinder: **Raubenheimer, Hans-Juergen**
**Benzstrasse 6**
**D-6834 Ketsch(DE)**

(54) **Verfahren zur Steuerung der Teilchengrösse bei der Herstellung von pulverförmigen Polymerisaten.**

(57) Verfahren zur Steuerung der Teilchengröße bei der Herstellung von pulverförmigen hydrophilen Polymerisaten durch Polymerisieren von wasserlöslichen monoethylenisch ungesättigten Monomeren in einem Pulverbett in Gegenwart von Polymerisationsinitiatoren und inerten Hilfsflüssigkeiten, bei dem man eine Lösung der Monomeren in einer inerten Hilfsflüssigkeit mit Hilfe einer Mehrstoffdüse, die in das Pulverbett eintaucht, mit einem Inertgasstrom zu feinen Tröpfchen verteilt und dabei die Teilchengröße der entstehenden pulverförmigen Polymerisate durch Variation der Inertgasmenge regelt.

EP 0 373 439 A2

### Verfahren zur Steuerung der Teilchengröße bei der Herstellung von pulverförmigen Polymerisaten

Aus der US-PS 4 135 043 ist ein Verfahren zur Herstellung von pulverförmigen wasserlöslichen Polymerisaten bekannt, bei dem man wasserlösliche ethylenisch ungesättigte Monomere in einem Pulverbett in Gegenwart üblicher Polymerisationsinitiatoren und Wasser als Hilfsflüssigkeit unter Aufrechterhaltung des Pulverzustands, Abführen der Polymerisationswärme durch Abdestillieren von Wasser und Umwälzung der Reaktionsmasse polymerisiert.

Aus der CA-PS 1 194 648 ist ebenfalls ein Verfahren zur Herstellung von pulverförmigen Polymerisaten durch Polymerisieren der Monomeren in einem Pulverbett bekannt, bei dem man zum Abführen der Polymerisationswärme inerte organische Lösemittel verwendet, die ein Fällungsmittel für die Polymerisate sind.

Aus der EP-PS 0 113 048 ist ein Verfahren zur Herstellung von pulverförmigen Polymerisaten auf Basis von wasserlöslichen ethylenisch ungesättigten Monomeren in einem Pulverbett bekannt. Die Monomeren werden in Form einer wäßrigen Lösung oder gelöst in Wasser-Isopropanol-Mischungen in Gegenwart üblicher Polymerisationsinitiatoren unter Aufrechterhaltung des Pulverzustands, Abführen der Polymerisationswärme durch Abdestillieren der Lösemittel und Umwälzung der Reaktionsmasse polymerisiert, wobei 40 bis 95 % der Säuregruppen der Monomeren neutralisiert sind und die Polymerisation zusätzlich in Gegenwart von Polymerisationsreglern, wie Thiocarbonsäuren oder 2-Mercaptoethanol, durchgeführt wird. Bei den oben beschriebenen verfahren zur Herstellung pulverförmiger Polymerisate in einem Pulverbett fallen Pulver mit einer relativ breiten Teilchengrößenverteilung an, die beispielsweise in dem Bereich von 10 $\mu$m bis 20 mm liegen. In den meisten Fällen ist es daher unerläßlich, daß man die so erhältlichen Produkte auf die gewünschte Teilchengröße zerkleinert und das zerkleinerte Material anschließend siebt.

Der vorliegenden Erfindung liegt die Aufgabe zugrunde, die Teilchengröße von pulverförmigen Polymerisaten beim Polymerisieren von wasserlöslichen monoethylenisch ungesättigten Monomeren in einem Pulverbett so zu steuern, daß man möglichst staubfreie Pulver mit einer engen Korngrößenverteilung erhält, so daß das sonst übliche Zerkleinern und Sieben der Polymerisate im Anschluß an die Polymerisation entfallen kann.

Die Aufgabe wird erfindungsgemäß gelöst mit einem Verfahren zur Steuerung der Teilchengröße bei der Herstellung von pulverförmigen hydrophilen Polymerisaten durch Polymerisieren von wasserlöslichen monoethylenisch ungesättigten Monomeren in einem Pulverbett in Gegenwart von Polymerisationsinitiatoren und inerten Hilfsflüssigkeiten unter Aufrechterhaltung des Pulverzustands, Abführen der Polymerisationswärme durch Abdestillieren der Hilfsflüssigkeiten und Umwälzung der Reaktionsmasse, wenn man eine Lösung der Monomeren in einer inerten Hilfsflüssigkeit mit Hilfe einer Mehrstoffdüse, die in das Pulverbett eintaucht, mit einem Inertgasstrom zu feinen Tröpfchen zerteilt und dabei die Teilchengröße der entstehenden pulverförmigen Polymerisate durch Variation der Inertgasmenge regelt. Zum Zerteilen der Monomerlösung mit Hilfe von Mehrstoffdüsen benötigt man 10 bis 100 l Inertgas pro Liter Monomerlösung.

Geeignete wasserlösliche monoethylenisch ungesättigte Monomere sind beispielsweise ethylenisch ungesättigte $C_3$- bis $C_5$-Monocarbonsäuren, Dicarbonsäuren und Carbonsäureanhydride, wie Acrylsäure, Methacrylsäure, Maleinsäure, Maleinsäureanhydrid, Itakonsäureanhydrid, Fumarsäure und Itakonsäure, Amide ethylenisch ungesättigter Carbonsäuren, insbesondere Acrylamid und Methacrylamid, sowie basische Acrylamide und Methacrylamide, wie Di-$C_1$- bis $C_3$-alkylamino-$C_2$- bis $C_4$-alkylacrylamide oder die entsprechenden Methacrylamide, wie Aminoalkylacrylamide oder Aminoalkylmethacrylamide, z.B. Dimethylaminomethylacrylamid, Dimethylaminoethylacrylamid, Aminoethylacrylamid, Aminoethylmethacrylamid, Diethylaminoethylacrylamid und Diethylaminoethylmethacrylamid, Ester aus ethylenisch ungesättigten $C_3$- bis $C_5$-Carbonsäuren mit Aminoalkoholen, z.B. Dimethylaminoethylacrylat, Dimethylaminoethylmethacrylat, Diethylaminoethylacrylat, Diethylaminoethylmethacrylat, Dimethylamino-n-propylacrylat, Dimethyl-n-propylmethacrylat, Dimethylaminoneopentylacrylat und Dimethylaminoneopentylmethacrylat, N-Vinylpyrrolidon und substituierte N-Vinylpyrrolidone, N-Vinylimidazol und substituierte N-Vinylimidazole, wie 1-Vinyl-2-methyl imidazol, N-Vinylimidazolin und substituierte N-Vinylimidazoline, wie 1-Vinyl-2-methylimidazolin, Vinylsulfonsäure, Acrylamidomethylpropansulfonsäuren und N-Vinylformamid. Diejenigen Monomeren, die eine Carboxylgruppe oder eine Sulfonsäuregruppe enthalten, können in Form der freien Säuregruppen oder auch in partiell oder vollständig neutralisierter Form eingesetzt werden. Zum Neutralisieren verwendet man Alkalimetallbasen, Ammoniak, substituierte Ammoniumverbindungen oder auch Erdalkalimetallbasen. Vorzugsweise führt man die Neutralisation der Säuregruppen enthaltenden Monomeren mit Natronlauge, Kalilauge, Ammoniak oder Alkanolaminen durch. Die basischen Monomeren wie Dialkylaminoethylacrylate und -methacrylate werden in Form der freien Basen oder vorzugsweise in Salzform, d.h. nach Neutralisation mit anorganischen oder organischen Säuren der Polymerisation unterworfen.

2

Vorzugsweise verwendet man als Salze die Chloride oder Sulfate. Außerdem können diese Monomeren in quarternisierter Form der Polymerisation unterworfen werden.

Die oben genannten wasserlöslichen monoethylenisch ungesättigten Monomeren können entweder allein oder in Mischung miteinander polymerisiert werden. So sind beispielsweise nach diesem Verfahren pulverförmige Homopolymerisate von Acrylsäure, Methacrylsäure, Acrylamid und N-Vinylformamid herstellbar. Daneben besitzt auch die Herstellung von Copolymerisaten aus wasserlöslichen Monomeren technisches Interesse, z.B. lassen sich folgende pulverförmige Polymerisate problemlos herstellen: Copolymerisate aus Acrylsäure und Maleinsäure, Copolymerisate aus Acrylsäure und Methacrylsäure, Copolymerisate aus Acrylsäure und Acrylamid, Copolymerisate aus Acrylsäure und Itakonsäure, Copolymerisate aus Acrylamid und Methacrylsäure, Copolymerisate aus Acrylamid und Itakonsäure, Copolymerisate aus Acrylamid, Acrylsäure und Dimethylaminoethylacrylat und Copolymerisate aus Acrylsäure und/oder Methacrylsäure und Vinylsulfonsäure oder deren Natrium-, Kalium- und Ammoniumsalzen. Die oben beschriebenen Copolymerisate können die Monomeren in jedem beliebigen Verhältnis einpolymerisiert enthalten.

Die Copolymerisation kann jedoch auch in Gegenwart von anderen monoethylenisch ungesättigten Monomeren durchgeführt werden, die sich in Wasser nicht oder nur sehr wenig lösen. Zu dieser Gruppe von Monomeren die zur Modifizierung der oben beschriebenen hydrophilen Polymerisate verwendet werden können, wird jedoch nur so viel bei der Copolymerisation eingesetzt, daß die entstehenden Copolymerisate sich noch in Wasser lösen. Hierfür eignen sich beispielsweise Mengen bis zu 50 Gew.%, bezogen auf die bei der Polymerisation insgesamt eingesetzten Monomeren. Zu dieser Gruppe von Monomeren gehören beispielsweise Ester aus monoethylenisch ungesättigten Carbonsäuren und gesättigten $C_1$- bis $C_8$-Alkoholen, wie Acrylsäuremethylester, Methacrylsäuremethylester, Acrylsäureethylester, Methacrylsäureethylester, Acrylsäureisobutylester, Methacrylsäureisobutylester, 2-Ethylhexylacrylat und 2-Ethylhexylmethacrylat, Vinylester, wie Vinylacetat, Vinylpropionat, Vinylbutyrat, Vinylether, wie Methylvinylether, Ethylvinylether, Propylvinylether und Butylvinylether sowie Acrylnitril und Methacrylnitril.

Die Copolymerisation kann außerdem in Gegenwart von geringen Mengen einer anderen Gruppe von Monomeren durchgeführt werden, die mindestens zwei ethylenisch ungesättigte Doppelbindungen enthalten. Geeignete Verbindungen dieser Art sind beispielsweise N,N'-Methylenbisacrylamid, Polyethylenglykolacrylate und Polyethylenglykoldimethacrylate, die sich jeweils von Polyethylenglykolen eines Molekulargewichts von 106 bis 4000 ableiten, Trimethylolpropantriacrylat, Trimethylolpropantrimethacrylat, Ethylglykoldiacrylat, Propylenglykoldiacrylat, Butandioldiacrylat, Hexandioldiacrylat, Hexandioldimethacrylat, Diacrylate und Dimethyacrylate von Blockcopolymerisaten aus Ethylenoxid und Propylenoxid mit Molekulargewichten bis 3000, zweifach bis dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin, Polyglycerin eines Molekulargewichts bis 2000 oder Pentaerythrit, Triallylamin, Tetraallylethylendiamin, Divinylbenzol, Diallylphthalat, Polyethylenglykoldivinylether, Trimethylolpropandiallylether, Butandioldivinylether, Pentaerythrittriallylether und/oder Divinylethylenharnstoff. Vorzugsweise verwendet man aus dieser Gruppe von Monomeren von N,N'-Methylenbisacrylamid, Polyethylenglykoldiacrylate, Polyethylenglykoldimethacrylate und Pentaerythrittriallylether. Falls die Monomeren dieser Gruppe bei der Copolymerisation eingesetzt werden, werden sie in Mengen von 0,01 bis 5, vorzugsweise 0,1 bis 2 Gew.%, bezogen auf die gesamten Monomeren, angewendet. Diese Monomeren bewirken eine Vernetzung der Polymerisate und führen dazu, daß die entstehenden Polymerisate nicht mehr wasserlöslich sind, sondern in Wasser quellen. Solche Polymerisate können beträchtliche Mengen an Wasser absorbieren und werden daher als Wasser absorbierende Materialien verwendet.

Nach dem Verfahren der Festbettpolymerisation können sowohl niedrigmolekulare Polymerisate als auch sehr hochmolekulare Polymerisate hergestellt werden. Die K-Werte dieser Polymerisate betragen 20 bis ca. 300 (bestimmt nach H. Fikentscher in 1 %iger wäßriger Lösung bei 25° C).

Als inerte Hilfsflüssigkeit kann man praktisch alle diejenigen Lösemittel verwenden, die unter den Polymerisationsbedingungen inert sind und die nicht merklich mit den bei der Polymerisation anwesenden Stoffen reagieren. Solche Lösemittel können jedoch einen Einfluß auf das Molekulargewicht der entstehenden Polymerisate haben, weil sie mehr oder weniger stark als Regler wirken können. Bei der Herstellung von niedrigmolekularen Polymerisaten ist dieses jedoch ein gewünschter Effekt. Regelnde Eigenschaften haben beispielsweise Alkohole. Als inerte Hilfsflüssigkeiten eignen sich beispielsweise Ketone, wie Aceton oder Methylethylketon, gesättigte aliphatische Kohlenwasserstoffe, wie Pentan, Hexan, Heptan, Octan, Isooctan und cyclische aliphatische Kohlenwasserstoffe, wie Cyclohexan oder Dekalin sowie Mischungen der genannten aliphatischen Kohlenwasserstoffe, aromatische Kohlenwasserstoffe, wie Benzol, Toluol und Xylol, halogenierte Kohlenwasserstoffe, wie 1,1,2-Trichlor-1,2,2-trifluorethan, Tetrachlorkohlenstoff, Trichlorfluormethan und Hexachlorethan, Ether, wie Methyl-tert.-butylether, Tetrahydrofuran und Dioxan, Ester, wie Methylacetat und Ethylacetat, Alkohole, wie gesättigte einwertige $C_1$- bis $C_8$-Alkohole, Dimethylformamid

3

und Wasser. Bevorzugte inerte Lösemittel sind Wasser sowie einwertige $C_1$- bis $C_6$-Alkohole, z.B. Methanol, Ethanol, n-Propanol, Isopropanol, n-Butanol, Isobutanol, tert.-Butanol und Cyclohexanol. Außerdem kommen als häufig angewandte Lösemittel Aceton, n-Hexan, Cyclohexan und Methyl-tert.-butylether in Betracht. Selbstverständlich ist es auch möglich, Mischungen der genannten Lösemittel einzusetzen. Wasser kann in den Fällen nicht verwendet werden, in denen Anhydride, wie Maleinsäureanhydrid bei der Polymerisation als Monomer verwendet werden. In diesen Fällen verwendet man als inerte Hilfsflüssigkeit beispielsweise Aceton. Der Siedepunkt der in Betracht kommenden inerten Hilfsflüssigkeiten beträgt bei 1013 mbar bis zu 190° C und liegt vorzugsweise in dem Temperaturbereich von 20 bis 150° C.

Zur Polymerisation werden die Monomeren in einer inerten Hilfsflüssigkeit oder in einer Mischung von inerten Hilfsflüssigkeiten gelöst. Die Monomerenkonzentration beträgt 30 bis 70, vorzugsweise 45 bis 60 Gew.%.

Die Polymerisation wird in Gegenwart von Polymerisationsinitiatoren durchgeführt. Die Polymerisationsinitiatoren können dem Pulverbett entweder separat von der Monomerlösung oder vorzugsweise auch zusammen mit der Monomerlösung zugeführt werden. Als Polymerisationsinitiatoren kommen vorzugsweise wasserlösliche oder in Wasser emulgierbare Hydroperoxide, Peroxide, Peroxidisulfate, Wasserstoffperoxid oder sogenannte Redoxkatalysatorsysteme und Azoverbindungen in Betracht. Vorzugsweise verwendet man Wasserstoffperoxid, Natrium-, Kalium- oder Ammoniumperoxidisulfat und wasserlösliche Azoverbindungen wie 2,2'-Azobis-(2-amidinopropan)-hydrochlorid. Bezogen auf die bei der Polymerisation eingesetzten Monomeren verwendet man 1 bis 20, vorzugsweise 5 bis 10 Gew.% eines Initiators. Die Initiatormengen richten sich nach dem Molekulargewicht der herzustellenden Polymerisate. Sofern Polymerisate mit besonders niedrigem Molekulargewicht hergestellt werden sollen, verwendet man höhere Einsatzmengen an Initiatoren. In diesen Fällen führt man die Polymerisation vorzugsweise noch in Gegenwart von Polymerisationsreglern durch.

Geeignete Polymerisationsregler sind beispielsweise Mercaptoalkohole, wie 2-Mercaptoethanol, Mercaptopropanol, Mercaptobutanole und Mercaptohexanol, Thioglykolsäure, Thiomilchsäure, 3-Mercaptopropionsäure, 2-Mercaptobuttersäure, 3-Mercaptobuttersäure und 3-Mercaptobernsteinsäure und Mercaptane, wie Dodecylmercaptan, Aldehyde, wie Formaldehyd, Acetaldehyd, Propionaldehyd, Butyraldehyde, Ameisensäure, Ammoniumformiat, Hydroxylammoniumsalze, insbesondere Hydroxylammoniumsulfat und Propionsäure. Geeignete Polymerisationsregler sind außerdem Enolether sowie Salze oder Chelate von Kupfer und von Übergangsmetallen der 8. Nebengruppe des periodischen Systems. Z.B. Kupfernitrat, Kupfersulfat, Kupferacetat, Eisensulfat, Eisennitrat, Mangansulfat, Mangan-3-acetat, Kobaltnitrat und Nickelnitrat. Falls bei der Polymerisation Regler eingesetzt werden, so betragen die Mengen 0,1 bis 10, vorzugsweise 3 bis 6 Gew.%. Die bevorzugt eingesetzten Regler sind Thioglykolsäure und 2-Mercaptoethanol. Die Regler werden vorzugsweise zusammen mit der Monomerlösung in die Polymerisationszone eingebracht, können jedoch auch separat von dem Monomeren in das Pulverbett eingeführt werden.

Um die Monomeren in einem Pulverbett zu polymerisieren, muß man, wie bei den bekannten Verfahren üblich, ein pulverförmiges Material vorlegen. Hierbei kann es sich um ein inertes anorganisches Pulver handeln oder auch um pulverförmige Polymerisate. Ein solches pulverförmiges Polymerisat kann beispielsweise ein nach einer bekannten Methode hergestelltes Polymerisat sein. Vorzugsweise legt man ein pulverförmiges Polymerisat vor, dessen Zusammensetzung im wesentlichen der Zusammensetzung des Polymerisats entspricht, das hergestellt werden soll. So kann man beispielsweise zur Herstellung von niedrigmolekularen Polymerisaten der Acrylsäure zunächst eine pulverförmige Polyacrylsäure im Reaktor vorlegen, die durch Polymerisieren von Acrylsäure in Isopropanol oder Mischungen aus Isopropanol und Wasser nach dem aus der US-PS 4 301 266 bekannten Verfahren erhältlich ist. Allerdings ist es dazu erforderlich, die bei der Lösungspolymerisation der Acrylsäure verwendeten Lösemittel zunächst zu entfernen und das pulverförmige Polymerisat zu isolieren. Man kann jedoch genausogut ein anderes Polymerisat, z.B. pulverförmiges Polyacrylamid, im Reaktor vorlegen und dann Acrylsäure polymerisieren. Bei kontinuierlichem Betrieb des Polymerisationsreaktors wird dann das vorgelegte Polyacrylamid allmählich ausgeschleust bis schließlich reine pulverförmige Polyacrylsäure ausgetragen wird. Die Teilchengröße des vorgelegten Pulvers beträgt 0,5 bis 5, vorzugsweise 1 bis 3 mm.

Als Polymerisationsvorrichtungen kommen beispielsweise Kessel, Rührautoklaven, Kombinationen von Rührkesseln mit nachgeschaltetem Strömungsrohr oder Kaskaden von Rührkesseln oder Rührautoklaven in Betracht. Das in der Polymerisationsvorrichtung vorgelegte pulverförmige Material wird unter Umwälzung auf die Polymerisationstemperatur erhitzt. Die Polymerisation der Monomeren kann in einem weiten Temperaturbereich durchgeführt werden, z.B. in dem Bereich von 30 bis 180, vorzugsweise 120 bis 150° C. Die Temperatur bei der Polymerisation sollte mindestens 10° C unterhalb des Schmelzpunkts bzw. des beginnenden Erweichungsbereichs des Polymerisats liegen, so daß die einzelnen Polymerteilchen nicht miteinander verkleben. Die Temperatur muß selbstverständlich so hoch sein, daß die jeweils verwendete

EP 0 373 439 A2

inerte Flüssigkeit bzw. Mischung von inerten Flüssigkeiten aus der Polymerisationszone verdampft. Die Polymerisation kann bei Normaldruck, bei vermindertem Druck oder auch unter erhöhtem Druck, z.B. bis zu 25 bar durchgeführt werden. Für den Produktionsbetrieb kommt praktisch nur eine kontinuierliche Herstellung der Polymerisate in Betracht. Sofern lediglich geringere Mengen an pulverförmigen Polymerisaten hergestellt werden sollen, kann die Polymerisation auch diskontinuierlich durchgeführt werden. Bei kontinuierlichem Betrieb wird die Monomerlösung kontinuierlich oder in Intervallen der Reaktionszone zugeführt und das Polymerisat kontinuierlich oder ebenfalls in Intervallen mit Hilfe einer geeigneten Austragsvorrichtung, z.B. Schnecke, daraus entfernt. Pro Zeiteinheit wird dabei etwa die gleiche Menge an Polymerisat entfernt, wie an Monomeren in die Reaktionszone eingebracht wird, so daß ein stationärer Zustand erreicht wird.

Das wesentliche Merkmal der vorliegenden Erfindung besteht darin, daß man eine Lösung der Monomeren in der inerten Hilfsflüssigkeit mit Hilfe einer Mehrstoffdüse, die in das Pulverbett eintaucht, mit einem Inertgasstrom zu feinen Tröpfchen zerteilt. Die Teilchengröße dieser Tröpfchen korreliert dabei mit der Teilchengröße der entstehenden pulverförmigen Polymerisate. Durch Variation der Inertgasmenge, die zum Zerteilen der Lösung der Monomeren in der inerten Hilfsflüssigkeit angewandt wird, liegt in dem Bereich von 10 bis 100 l Inertgas pro l Monomerlösung. Die Größe der Tröpfchen der Lösung der Monomeren in den inerten Hilfsflüssigkeiten kann auch mit Hilfe einer Änderung der Spaltweiten an der Düse variiert werden. Die einfachste Steuerung der Teilchengröße der zu polymerisierenden Monomeren in der Hilfsflüssigkeit ist jedoch mit Hilfe der Menge an Inertgas möglich. Die Spaltweiten der Düsen betragen 0,5 bis 6, vorzugsweise 0,7 bis 2 mm.

Im einfachsten Fall wird die Lösung der Monomeren in der inerten Hilfsflüssigkeit mit Hilfe einer Zweistoffdüse innerhab des Pulverbetts von einem Inertgasstrom zu feinen Tröpfchen zerteilt. Die Zweistoffdüse besteht beispielsweise aus 2 konzentrisch angeordneten Ringspalten. Die Monomerlösung kann dabei durch den inneren oder auch durch den äußeren Spalt in das Pulverbett eingeführt werden. Vorzugsweise leitet man die Lösung der Monomeren in den inerten Hilfsflüssigkeiten durch den inneren Spalt der Düse und durch den äußeren Spalt der Düse einen Inertgasstrom. Als Inertgase kommen vorzugsweise Stickstoff oder Kohlendioxid in Betracht.

Sofern während der Polymerisation noch eine Neutralisation der zu polymerisierenden Monomeren vorgenommen wird, empfehlt sich der Einsatz einer Dreistoffdüse, durch die die Lösung der Monomeren in den Hilfsflüssigkeiten, das Neutralisierungsmittel und der Inertgasstrom getrennt von einander in die Polymerisationszone eingebracht werden. Die Dreistoffdüse besteht im wesentlichen aus 3 konzentrischen Spaltöffnungen, durch die die Produktströme in den Reaktor eingegeben werden. Vorzugsweise wird durch den äußeren Ringspalt der Dreistoffdüse das Inertgas, z.B. Stickstoff, geleitet. Durch den inneren Spalt kann entweder die Monomerenlösung oder das Neutralisationsmittel geführt werden. Es ist selbstverständlich möglich, die Produktströme auch in einer anderen Reihenfolge durch die Dreistoffdüse zu führen. Bei Anwendung der Mehrstoffdüse werden beispielsweise die in den inerten Hilfsflüssigkeiten gelösten Monomeren außerhalb der eigentlichen Düse mit dem Neutralisationsmittel gemischt und unmittelbar mit Hilfe des Stickstoffstroms zu feinen Tröpfchen zerteilt. Die Neutralisations- und Polymerisationswärme wird jeweils durch Verdampfen der inerten Hilfsflüssigkeiten aus dem System entfernt. Die Temperaturen werden dabei immer in einem Bereich gehalten, daß der Pulverzustand im Reaktor bestehen bleibt. Während der Polymerisation werden die Hilfsflüssigkeiten aus dem System abdestilliert und die Reaktionsteilnehmer im Reaktor fortlaufend umgewälzt, z.B. mit Hilfe eines Rührers in Bewegung gehalten. Die Lösung der Monomeren in den inerten Hilfsflüssigkeiten kann mit Hilfe einer einzigen Mehrstoffdüse oder auch mit Hilfe mehrerer solcher Düsen, die jweils in das Pulverbett eintauchen und auch während der Polymerisation darin münden, eingeführt werden.

Die Polymerisationsinitiatoren werden zweckmäßig mit der Lösung der Monomeren in den Hilfsflüssigkeiten in die Polymerisationszone eingeführt. Die Lösung der Monomeren in den inerten Hilfsflüssigkeiten kann außer den Polymerisationsinitiatoren auch die ggf. anzuwendenden Polymerisationsregler enthalten. Sofern durch Polymerisieren im Pulverbett auch Popkornpolymerisate hergestellt werden sollen, verfährt man in der Weise, daß man in Abwesenheit von Polymerisationsinitiatoren arbeitet und - wie bei Popkornpolymerisationen üblich - eine monoethylenisch ungesättigte Verbindung, z.B. N-Vinylpyrrolidon, zusammen mit einer mindestens zwei Doppelbindungen aufweisenden Verbindung, copolymerisiert. Verfahren dieser Art sind beispielsweise aus der EP-A-175 335 und der EP-A-177 812, bekannt. Auch bei der Herstellung dieser Polymerisatklasse ist es möglich, die Teilchengröße der Popkornpolymerisate mit Hilfe der Inertgasmenge zu regulieren, die zur Zerteilung der Lösung der Monomeren in der Hilfsflüssigkeit jeweils angewandt wird.

Im Fall der Polymerisation von Säuregruppen enthaltenden wasserlöslichen monoethylenisch ungesättigten Monomeren, z.B. Acrylsäure oder Methacrylsäure, wird die Polymerisation vorzugsweise so geführt, daß man während der Polymerisation eine partielle Neutralisation der Carbonsäuregruppen durchführt. Die dabei freiwerdende Neutralisationswärme wird dann zusammen mit der bei der Polymerisation freiwerdenden Wärme und derjenigen Wärme, die durch die Umwälzung des Polymeren im Reaktionsgefäß entsteht, durch Verdampfen der inerten Hilfsflüssigkeiten aus der Polymerisationszone entfernt. Vorzugsweise erfolgt die Neutralisation der Säuregruppen der wasserlöslichen Monomeren zu 40 bis 95, insbesondere 70 bis 90 % während der Polymerisation. Zur Herstellung von niedrigmolekularen Polymerisaten der Acrylsäure oder Methacrylsäure oder Copolymerisaten aus Methacrylsäure und Acrylsäure verwendet man beispielsweise als Hilfsflüssigkeit Wasser oder Mischungen aus Wasser und Isopropanol, führt die Monomerlösung durch den inneren Spalt einer Dreistoffdüse, eine wäßrige Natronlauge durch den mittleren Spalt und Stickstoff durch den äußeren Spalt der Dreistoffdüse. Die Monomerlösung kann gegebenenfalls bis zu 30 Gew.-% Vinylsulfonsäure, Natriumvinylsulfonat, Kaliumvinylsulfonat oder Ammoniumvinylsulfonat enthalten. Zur Herstellung besonders niedrigmolekularer Polymerisate der Acrylsäure sowie von Copolymerisaten aus Acrylsäure und Vinylsulfonsäure bzw. aus Methacrylsäure und Vinylsulfonsäure führt man die Polymerisation zusätzlich in Gegenwart von Reglern durch. Die Regler werden in diesem Fall der Monomerlösung zugesetzt. Vorzugsweise verwendet man zur Herstellung besonders niedrigmolekularer Polymerisate der Acrylsäure und Methacrylsäure Mischungen von Reglern, z.B. 0,5 bis 10 Mol-% einer Thiocarbonsäure und/oder eines Mercaptoalkohols sowie zusätzlich 0,05 bis 10 Mol-% Propionsäure und/oder Ameisensäure. Man erhält auf diese Weise bei der Polymerisation im Pulverbett besonders niedrigmolekulare, pulverförmige Polyacrylsäure. Die K-Werte der niedrigmolekularen Polymerisate der Acrylsäure oder Methacrylsäure betragen 20 bis 40 (bestimmt nach H. Fikentscher in Wasser bei einer Polymerkonzentration von 1 Gew.-% und einer Temperatur von 25°C bei pH 7,0 als Natriumsalz). Die Homopolymerisate der Acrylsäure oder Methacrylsäure bzw. die Copolymerisate, z.B. Copolymerisate aus Acrylsäure und Vinylsulfonsäure oder Natriumvinylsulfonat oder Copolymerisate aus Methacrylsäure und Vinylsulfonat werden als Mahlhilfsmittel und/oder Dispergiermittel zur Herstellung wäßriger Aufschlämmungen von Pigmenten für Papierstreichmassen in Mengen von 0,05 bis 1, vorzugsweise 0,3 bis 0,6 Gew.-%, bezogen auf Pigment, verwendet. Ein weiteres Anwendungsgebiet dieser Polymerisate besteht in dem Einsatz in Waschmitteln. Sie werden darin als Inkrustierungsinhibitoren verwendet. Die Anwendungsmengen hierfür betragen 0,5 bis 10 Gew.-% bezogen auf das Waschmittel.

Nach dem erfindungsgemäßen Verfahren sind beispielsweise pulverförmige Polymerisate von Acrylamid mit K-Werten bis zu 250 erhältlich. Solche hochmolekularen Polyacrylamide werden beispielsweise bei der Herstellung von Papier als Retentions- und Entwässerungshilfsmittel oder zur Abwasserklärung industrieller und kommunaler Abwässer verwendet. Sie können auch zur Entwässerung von Schlämmen verwendet werden. Vernetzte Copolymerisate aus Acrylsäure, die eine hohe Wasseraufnahme haben, werden beispielsweise in Windeln als wasserabsorbierende Substanz verwendet.

Die Prozentangaben in den Beispielen sind Gew.-%. Die K-Werte wurden nach H. Fikentscher, Cellulosechemie, Band 13, 48 bis 64 und 71 bis 74 (1932) in 1 gew.-%iger wäßriger Lösung bei einer Temperatur von 25°C und einem pH-Wert von 7,0 am Na-Salz der Polymerisate gemessen; dabei bedeutet K = k x 10³.

Für die folgenden Beispiele und Vergleichsbeispiele wurde ein 40 l fassender Polymerisationskessel verwendet, der mit einem Wenderührer, einem absteigenden Kühler und einer Dreistoffdüse ausgestattet war, die 15 cm unterhalb der Oberfläche der vorgelegten pulverförmigen Polyacrylsäure mündete. Die Spaltweiten der konzentrischen, ringförmigen Dreistoffdüse betrugen:

innen: 0,8 mm

Mitte: 0,7 mm

außen: 1,25 mm.

In den Reaktor mündete außerdem eine Stickstoffleitung, um die Polymerisation unter Stickstoffatmosphäre durchzuführen. Der Druck im Polymerisationsreaktor wurde durch ein im Anschluß an den absteigenden Kühler eingebautes Druckregelventil konstant gehalten. Der Polymerisationsreaktor wurde mit Hilfe eines wasserdampfbeheizten Druckwasserkreises auf die Polymerisationstemperatur gebracht. Zwischen Polymerisationsreaktor und dem absteigenden Kühler war ein Abscheider angeordnet, um eventuell durch den Stickstoffstrom bzw. das verdampfende Siedehilfsmittel mitgerissene Feststoffe zurückzuhalten. Der Polymerisationsreaktor war zur Kontrolle der Temperatur des Pulvers mit einer in das Pulver reichenden Temperaturmeßsonde ausgestattet. Um das während der Polymerisation sich bildende Polymerisat aus dem Reaktor auszuschleusen, war der Reaktor seitlich im oberen Drittel mit einer Austragsschnecke versehen, die bei Erreichen eines bestimmten Standes an Polymerisat im Kessel das pulverförmige Material austrug. Die Menge des Polymerisates im Kessel wird durch kontinuierlichen Austrag während der Polymerisation praktisch konstant gehalten. Der Auffangbehälter, in den das Gut ausgetragen wurde, konnte durch 2 Absperrorgane periodisch von Polymerisationskessel abgekoppelt, ent spannt und entleert werden.

In der oben beschriebenen Vorrichtung wurden 20 kg eines granulierten, durch Sprühtrocknung eines Lösungspolymerisates der Acrylsäure hergestellten Pulvers mit einem Korndurchmesser von 2 bis 3 mm vorgelegt und unter intensiver Umwälzung auf die jeweils in den folgenden Beispielen und Vergleichsbeispielen angegebene Temperatur erwärmt.

Beispiel 1

In einem statischen Mischer werden stündlich 5,2 kg Acrylsäure, 0,8 kg Wasser als inerte Hilfsflüssigkeit, 0,27 kg 2-Mercaptoethanol und 0,96 kg 50 %iges Wasserstoffperoxid kontinuierlich gemischt und dem inneren Spalt der Dreistoffdüse zugeführt. Dem mittleren Spalt der Dreistoffdüse wird eine wäßrige Lösung von 2500 g Natriumhydroxid in 2500 g Wasser kontinuierlich pro Stunde zugeführt. Durch den äußeren Spalt der Dreistoffdüse führt man einen Stickstoffstrom von 200 l/h. Pro l der Monomerlösung einschließlich des Neutralisationsmittels verwendete man 16 l Stickstoff. Die Polymerisationstemperatur betrug 140°C. Im Reaktor wurde ein Druck von 1,7 bar durch Aufpressen von Stickstoff eingestellt. Während der Polymerisation wird das Pulver gerührt und der Pulverzustand der Reaktionsmischung aufrechterhalten. Das als Hilfsflüssigkeit zugeführte Wasser wurde mit dem aus der Neutralisation freiwerdenden Wasser kontinuierlich abdestilliert. Die Kondensatmenge betrug 4,5 kg pro h. Über die Austragsschnecke wurde eine Polymerisatmenge von 7 kg pro h aus dem Polymerisationskessel in das Austragsgefäß gebracht, in dem es 1 h bei 140°C und 1,70 bar gehalten wurde. Danach wurde das Gefäß langsam entspannt und das körnige Gut ausgetragen. Nach einer Polymerisationszeit von insgesamt 36 h, entsprechend etwa 15 Kesseldurchsätzen, wurde eine Probe des ausgeschleusten Polymerisats untersucht. Die zu 85 % neutralisierte Polyacrylsäure hatte danach einen Restmonomerengehalt von weniger als 1 %, enthielt weniger als 1 % Quellkörper und hatte einen K-Wert von 40,1 und die in der Tabelle angegebene Korngrößenverteilung.

Beispiel 2

Beispiel 1 wird mit den Ausnahmen wiederholt, daß man dem statischen Mischer stündlich 4900 g Acrylsäure, 270 g 2-Mercaptoethanol, 1100 g einer 25 %igen wäßrigen Lösung von Natriumvinylsulfonat in Wasser und 960 g einer 50 %igen Lösung von Wasserstoffperoxid zuführt. Dieser Monomerenstrom wird durch den inneren Spalt der Dreistoffdüse in das Pulverbett eingeleitet, durch den mittleren Spalt der konzentrischen Dreistoffdüse führt man stündlich eine wäßrige Lösung von 2080 g Natriumhydroxid in 2080 g Wasser und leitet durch den äußeren Spalt der Dreistoffdüse stündlich 200 l Stickstoff. Die Öffnung der Dreistoffdüse befand sich ca. 10 cm unterhalb der Oberfläche des Pulvers. Zum Zerteilen von einem l des Monomerenstroms und der wäßrigen Natronlauge benötigte man 16 l Stickstoff. Die Polymerisation wurde ansonsten unter den im Beispiel 1 angegebenen Bedingungen durchgeführt. Man erhielt ein feinkörniges Copolymerisat mit einem K-Wert von 39,5 und einem Neutralisationsgrad von 90,5 %. Die Korngrößenverteilung ist in der Tabelle angegeben.

Beispiel 3

Beispiel 1 wurde mit der Ausnahme wiederholt, daß man durch den äußeren Ringspalt der Düse 500 l Stickstoff pro h leitete, entsprechend einer Sticksoffmenge von 40 l pro l Monomerlösung und der als Neutralisationsmittel verwendeten wäßrigen Natronlauge. Man erhielt ein feinkörniges Polymerisat mit einem K-Wert von 39,8, das die in der Tabelle angegebene Korngrößenverteilung hatte.

Vergleichsbeispiel 1

Beispiel 1 wurde mit der Ausnahme wiederholt, daß man die Dreistoffdüse durch eine Einstoffdüse ersetzte, deren Mündung 15 cm oberhalb des pulverförmgen Polymerisats im Reaktor endete. Der aus dem statischen Mischer kommende Monomerenstrom, der aus Acrylsäure, Wasser, Mercaptoethanol und Wasserstoffperoxid bestand, wurde durch die Einstoffdüse auf das vorgelegte pulverförmige Polymerisat aufgesprüht. An einer anderen Stelle des Reaktors wurde die wäßrige Lösung von 2500 g Natriumhydroxid in 2500 g Wasser kontinuierlich pro h auf das bewegte Pulverbett aufgesprüht. Man erhielt auf diese Weise eine zu 85 % neutralisierte pulverförmige Polyacrylsäure mit einem Restmonomerengehalt von weniger als 1 %. Der Quellkörpergehalt des Polymerisats lag unterhalb 1 %. Das Polymerisat hatte einen K-Wert von 40,2 und die in der Tabelle angegebene Siebanalyse. Wie daraus zu erkennen ist, erhält man dadurch grobteiligere Polymerisate.

Vergleichsbeispiel 2

Das Vergleichsbeispiel 1 wird mit der einzigen Ausnahme wiederholt, daß der Abstand der Düsenmündung, durch die der Monomerstrom auf das Pulver aufgesprüht wurde, von der Pulveroberfläche 4 cm betrug. Man erhielt ein Polymerisat mit einem K-Wert von 39,8, das die in der Tabelle angegebene Korngrößenverteilung hatte.

Tabelle

| Polymerisat hergestellt nach Beispiel Nr. | Maschenweite [mm] der Siebe | <1 | 1-2 | 2-2,5 | 2,5-3,15 | 3,15-4 | <4 | <0,1 |
|---|---|---|---|---|---|---|---|---|
| 1 | | 16,4 | 67,4 | 7,6 | 4,6 | 2,1 | 1,8 | 0,1 |
| 2 | | 6,6 | 69,4 | 14,0 | 6,3 | 2,3 | 1,0 | 0,1 |
| 3 | | 27,0 | 60,1 | 10,9 | 0,6 | 0,9 | 0,5 | 0,0 |
| Vergleichsbeispiel Nr. | | | | | | | | |
| 1 | | 1,7 | 11,2 | 26,6 | 45,6 | 10,7 | 4,1 | 0,1 |
| 2 | | 3,0 | 25,5 | 39,0 | 22,5 | 8,4 | 1,5 | 0,1 |

Wie der Tabelle entnommen werden kann, erhält man nach dem erfindungsgemäßen Verfahren pulverförmige Polymerisate mit wesentlich engerer Teilchengrößenverteilung als nach dem bekannten Polymerisationsverfahren im Pulverbett. Außerdem ist der Staubanfall bei dem erfindungsgemäßen Verfahren wesentlich geringer als bei den bisher beschriebenen Arbeitsweisen.

**Ansprüche**

1. Verfahren zur Steuerung der Teilchengröße bei der Herstellung von pulverförmigen hydrophilen Polymerisaten durch Polymerisieren von wasserlöslichen monoethylenisch ungesättigten Monomeren in einem Pulverbett in Gegenwart von polymerisationsinitiatoren und inerten Hilfsflüssigkeiten unter Aufrechterhaltung des Pulverzustands, Abführen der Polymerisationswärme durch Abdestillieren der Hilfsflüssigkeiten und Umwälzung der Reaktionsmasse, dadurch gekennzeichnet, daß man eine Lösung der Monomeren in einer inerten Hilfsflüssigkeit mit Hilfe einer Mehrstoffdüse, die in das Pulverbett eintaucht, mit einem Inertgasstrom zu feinen Tröpfchen zerteilt und dabei die Teilchengröße der entstehenden pulverförmigen Polymerisate durch Variation der Inertgasmenge regelt.

2. Verfahren nach Anspruch 1, dadurch gekennzeichnet, daß man die zum Zerteilen der Monomerlösung erforderliche Inertgasmenge in dem Bereich von 10 bis 100 l pro Liter Monomerlösung variiert.